(19) Europäisches Patentamt
European Patent Office
Office européen des brevets

(11) EP 4 140 731 A1

(12) EUROPEAN PATENT APPLICATION
published in accordance with Art. 153(4) EPC

(43) Date of publication:
**01.03.2023 Bulletin 2023/09**

(21) Application number: **21792871.2**

(22) Date of filing: **20.04.2021**

(51) International Patent Classification (IPC):
***B32B 17/10*** (2006.01) ***B32B 27/30*** (2006.01)
***C03C 27/12*** (2006.01) ***C08F 8/30*** (2006.01)
***C08L 29/14*** (2006.01) ***B60J 1/00*** (2006.01)

(52) Cooperative Patent Classification (CPC):
**B32B 17/00; B32B 17/10; B32B 27/30; B60J 1/00; C08F 8/30; C08L 29/14**

(86) International application number:
**PCT/JP2021/016104**

(87) International publication number:
**WO 2021/215456 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2020 JP 2020075746**

(71) Applicant: **SEKISUI CHEMICAL CO., LTD.**
**Osaka-shi**
**Osaka**
**530-8565 (JP)**

(72) Inventors:
- **OOHIGASHI, Yuji**
  **Mishima-gun, Osaka 618-0021 (JP)**
- **TERAGUCHI, Yumiko**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

# (54) RESIN COMPOSITION, INTERMEDIATE FILM FOR LAMINATED GLASS, AND LAMINATED GLASS

(57) A resin composition, comprising a polyvinyl acetal-based resin, wherein the resin composition has a glass transition temperature of 50°C or lower, and the polar component γsp of the surface free energy according to the Kaelble-Uy method is a value of 0.1 mJ/$m^2$ or more and 8.0 mJ/$m^2$ or less.

EP 4 140 731 A1

## Description

### Technical Field

The present invention relates to a resin composition, an interlayer film for laminated glass comprising the resin composition, and a laminated glass.

### Background Art

Polyvinyl acetal-based resins are widely used in interlayer films for laminated glass in laminated glass. Laminated glass has two glass plates and an interlayer film for laminated glass disposed between the two glass plates, and the two glass plates are integrated by the interlayer film for laminated glass. Laminated glass is widely used in automobiles, railway vehicles, aircraft, ships, buildings, and others because, even when it is broken by an external impact, the amount of flying pieces of broken glass is small, and it provides excellent safety.

In order for interlayer films for laminated glass using polyvinyl acetal-based resins to have good adhesiveness to glass plates, for example, Patent Literature 1 discloses an interlayer film for laminated glass, wherein the interlayer film contains a first layer containing a thermoplastic resin such as a polyvinyl acetal-based resin, a plasticizer, and a metal element, and in the first layer, the d component (dispersive component) of the surface free energy is less than 35.9 $mJ/m^2$.

Polyvinyl acetal-based resins are also being considered for use in a variety of fields, other than as interlayer films for laminated glass, such as inks, paints, baking enamels, wash primers, lacquers, dispersants, adhesives, ceramic green sheets, heat developable photosensitive materials, and binders for water-based ink acceptable layers. And polyvinyl acetal-based resins have been attempted to be modified in order to impart a variety of functions to them.

For example, Patent Literature 2 discloses an alkyl-modified vinyl acetal-based polymer that ensures sufficient plasticity, solubility in alcohol solvents, and low viscosity and stability of those solutions, that is unlikely to undergo phase separation from other components, and that can provide slurries with excellent particle dispersing ability and thixotropy, sheets with excellent strength and flexibility, and others. The modified vinyl acetal-based polymer described in Patent Literature 2 is shown to be obtained by acetalizing a modified vinyl alcohol-based polymer that contains a monomer unit having -CCONRH (R is an alkyl group having 8 to 29 carbon atoms) as a side chain, that has a viscosity average degree of polymerization of 150 to 5000, a degree of saponification of 20 to 99.99 mol%, and an amount of modification by the above monomer of 0.05 to 5 mol%.

Furthermore, Patent Literature 3 discloses a resin composition for a laminated glass interlayer film comprising a modified polyvinyl acetal resin into which alkoxysilyl groups are introduced as side chains by isocyanates to improve moisture resistance, heat resistance, and penetration resistance, as well as a plasticizer.

### Citation List

### Patent Literature

PTL1: JP 2017-66007 A
PTL2: WO 2012/133351
PTL3: JP 2003-183059 A

## Summary of Invention

### Technical Problem

As the glass plate in laminated glass, in general, inorganic glass is widely used, but inorganic glass has problems such as heavy weight and occurrence of cracks when subjected to impact. Therefore, use of organic glass such as a polycarbonate plate is being considered for laminated glass plates.

However, use of conventional interlayer films for laminated glass containing polyvinyl acetal-based resins for organic glass such as polycarbonate plates may not improve adhesiveness.

In addition, interlayer films for laminated glass containing polyvinyl acetal-based resins often contain plasticizers in order to ensure flexibility and enhance adhesiveness to the glass. However, when interlayer films for laminated glass contain plasticizers, the plasticizers corrode resin materials such as organic glass as they are used, which decreases the light transmittance of glass plates composed of organic glass.

The above-described Patent Literatures 2 and 3 show that a variety of functions are imparted by modifying the polyvinyl acetal, but they do not show improvement in adhesiveness while preventing corrosion of the resin material such as polycarbonate.

Therefore, an object of the present invention is to provide a resin composition that comprises a polyvinyl acetal-based resin and that can, while preventing corrosion of the resin material such as polycarbonate, improve adhesiveness to such a resin material.

Solution to Problem

As a result of diligent investigations, the present inventors have found that, in a resin composition comprising a polyvinyl acetal-based resin, the above problems can be solved by keeping the polar component γsp of the surface free energy according to the Kaelble-Uy method in a predetermined range while keeping the glass transition temperature at or below a predetermined value, thereby completing the present invention as follows.

That is, the present invention provides the following [1] to [23]:

[1] A resin composition, comprising a polyvinyl acetal-based resin, and having a glass transition temperature of 50°C or lower and a value of a polar component γsp of a surface free energy according to a Kaelble-Uy method of 0.1 $mJ/m^2$ or more and 8.0 $mJ/m^2$ or less.

[2] The resin composition according to the above [1], wherein the polyvinyl acetal-based resin has at least one selected from the group consisting of functional groups represented by the following formula (1-1), formula (1-2), formula (1-3), and formula (1-4):

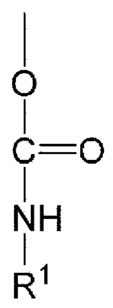
(1-1)

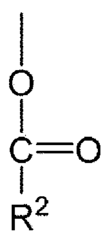
(1-2)

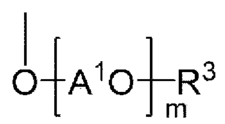
(1-3)

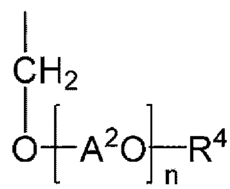
(1-4)

wherein, in formulae (1-1) and (1-2), $R^1$ and $R^2$ are each independently a hydrocarbon having 2 to 30 carbon atoms; in formulae (1-3) and (1-4), $A^1O$ and $A^2O$ are each independently an oxyalkylene group having 2 to 4 carbon atoms; m and n are average repeating numbers and are 4 to 200; and $R^3$ and $R^4$ are each independently an alkyl group having 1 to 4 carbon atoms or a hydrogen atom; provided that, in formulae (1-3) and (1-4), the oxyalkylene group may be one type alone or may be a mixture of two or more types.

[3] The resin composition according to the above [2], wherein the polyvinyl acetal-based resin has at least one selected from the group consisting of functional groups represented by the above formula (1-1) and formula (1-2).

[4] The resin composition according to the above [2] or [3], wherein, in the polyvinyl acetal-based resin, the amount of modification by the functional groups represented by formula (1-1) and formula (1-2) is 5 mol% or more and 25 mol% or less.

[5] The resin composition according to the above [2], wherein the polyvinyl acetal-based resin has at least one selected from the group consisting of functional groups represented by the above formula (1-3) and formula (1-4).

[6] The resin composition according to the above [2] or [5], wherein, in the polyvinyl acetal-based resin, the amount of modification by the functional groups represented by the above formula (1-3) and formula (1-4) is 0.2 mol% or more and 12 mol% or less.

[7] The resin composition according to any one of the above [2] to [6], wherein, in the polyvinyl acetal-based resin, the amount of modification by the functional groups represented by the above formula (1-1) to formula (1-4) is 0.2 mol% or more and 25 mol% or less.

[8] The resin composition according to any one of the above [1] to [7], wherein the resin composition contains no plasticizer or the resin composition contains a plasticizer in an amount of 10 parts by mass or less based on 100 parts by mass of the resin contained in the resin composition.

[9] The resin composition according to any one of the above [1] to [8], wherein the glass transition temperature is 5°C or higher.

[10] The resin composition according to any one of the above [1] to [9], wherein the polyvinyl acetal-based resin is a polyvinyl butyral-based resin.
[11] The resin composition according to any one of the above [1] to [10], wherein the degree of acetalization of the polyvinyl acetal-based resin is 40 mol% or more and 85 mol% or less.
[12] The resin composition according to any one of the above [1] to [11], wherein the amount of hydroxy groups in the polyvinyl acetal-based resin is 0 mol% or more and 35 mol% or less.
[13] The resin composition according to any one of the above [1] to [12], wherein the degree of acetylation of the polyvinyl acetal-based resin is 0.01 mol% or more and 50 mol% or less.
[14] The resin composition according to any one of the above [1] to [13], wherein the average degree of polymerization of the polyvinyl acetal-based resin is 300 or more and 5000 or less.
[15] The resin composition according to any one of the above [1] and [8] to [14], wherein the polyvinyl acetal-based resin is an unmodified polyvinyl acetal resin and the amount of hydroxy groups therein is 15 mol% or less.
[16] An interlayer film for laminated glass, comprising a first layer formed of the resin composition according to any one of the above [1] to [15].
[17] The interlayer film for laminated glass according to the above [16], wherein the interlayer film for laminated glass is composed of the first layer.
[18] The interlayer film for laminated glass according to the above [16] or [17], wherein the interlayer film for laminated glass has a thickness of 100 μm or more and 2000 μm or less.
[19] The interlayer film for laminated glass according to any one of the above [16] to [18], wherein the first layer constitutes an outermost surface of the interlayer film for laminated glass.
[20] A laminated glass comprising the interlayer film for laminated glass according to any one of the above [16] to [19] and first and second laminated glass members, wherein the interlayer film for laminated glass is disposed between the first and second laminated glass members.
[21] The laminated glass according to the above [20], wherein at least either of the first and second laminated glass members is organic glass or organic film.
[22] The laminated glass according to the above [21], wherein the first layer constitutes an outermost surface of the interlayer film for laminated glass and the outermost surface constituted by the first layer is in contact with the organic glass.
[23] The laminated glass according to any one of the above [20] to [22], wherein at least either of the first and second laminated glass members is a polycarbonate plate or a methacrylate plate.

Advantageous Effects of Invention

In the present invention, provided is a resin composition that comprises a polyvinyl acetal-based resin and that can improve adhesiveness while preventing corrosion of the resin material such as polycarbonate.

Brief Description of Drawings

[Fig. 1] Fig. 1 is a cross-sectional view schematically showing an interlayer film for laminated glass according to one embodiment of the present invention and laminated glass comprising the interlayer film for laminated glass.
[Fig. 2] Fig. 2 is a cross-sectional view schematically showing an interlayer film for laminated glass according to one embodiment of the present invention and laminated glass comprising the interlayer film for laminated glass.
[Fig. 3] Fig. 3 is a cross-sectional view schematically showing an interlayer film for laminated glass according to one embodiment of the present invention and laminated glass comprising the interlayer film for laminated glass.
[Fig. 4] Fig. 4 is a perspective view for describing a cross peeling test.

Description of Embodiments

<Resin composition>

A resin composition of the present invention comprises a polyvinyl acetal-based resin, the resin composition has a glass transition temperature of 50°C or lower, and the polar component γsp of the surface free energy according to the Kaelble-Uy method is a value of 0.1 mJ/$m^2$ or more and 8.0 mJ/$m^2$ or less.
In the present invention, the resin composition has the above configuration, and thus can improve adhesiveness while preventing corrosion of the resin material such as polycarbonate.
Hereinafter, a resin composition according to one embodiment of the present invention will be described in detail.

[Glass transition temperature]

The resin composition of the present invention has a glass transition temperature (Tg) of 50°C or lower. When the glass transition temperature (Tg) of the resin composition exceeds 50°C, sufficient flexibility is not developed, making it difficult to achieve good adhesiveness to the resin material such as polycarbonate and inorganic glass. From the viewpoint of enhancing flexibility and improving adhesiveness, the glass transition temperature (Tg) of the resin composition is preferably 48°C or lower, and still more preferably 45°C or lower.

Note that the glass transition temperature (Tg) of the resin composition is not particularly limited in terms of the lower limit value, but from the viewpoint of achieving good handleability without developing stickiness or other properties, it is, for example, 5°C or higher, preferably 10°C or higher, and more preferably 20°C or higher.

Note that the glass transition temperature of the resin composition can be detected by making the resin composition into a film, carrying out viscoelasticity measurement using a dynamic viscoelasticity measuring device, and reading peak temperatures of the loss tangent tan $\delta$ obtained from the results of the viscoelasticity measurement. Details of the measurement conditions are as described in Examples.

[Surface free energy]

In the resin composition of the present invention, the polar component ysp of the surface free energy according to the Kaelble-Uy method is a value of 0.1 mJ/$m^2$ or more and 8.0 mJ/$m^2$ or less. When the polar component ysp exceeds 8.0 mJ/$m^2$, the polar component ysp of the surface free energy is too high, and adhesiveness to resin materials with hydrophobicity, such as polycarbonate, may be decreased. In addition, after a long period of use, there may occur a defect such as corrosion of the resin material such as polycarbonate, which decreases the light transmittance of the resin material, for example. On the other hand, when the polar component ysp is less than 0.1 mJ/$m^2$, the polar component of the surface free energy is too low, and it is difficult to develop high adhesiveness to resin materials with hydrophobicity, such as polycarbonate.

From the viewpoint of enhancing adhesiveness while decreasing corrodibility of the resin material, the polar component ysp of the surface free energy is preferably 6.0 mJ/$m^2$ or less, more preferably 5.0 mJ/$m^2$ or less, and still more preferably 4.5 mJ/$m^2$ or less.

In addition, from the viewpoint of enhancing adhesiveness, the polar component ysp of the surface free energy is preferably 0.3 mJ/$m^2$ or more, more preferably 2.0 mJ/$m^2$ or more, and still more preferably 3.0 mJ/$m^2$ or more.

The polar component ysp of the surface free energy can be determined by measuring the contact angles of the resin composition with water and methylene iodide (diiodomethane) under an environment with a temperature of 23°C and a relative humidity of 50%, and calculating it according to the expressions below. For example, the resin composition may be molded into a film, and the contact angles may be measured by forming droplets on the resin composition that has been molded into a film.

$$\gamma s = \gamma sd + \gamma sp$$

$$72.8(1 + \cos \theta H) = 2(21.8\gamma sd)^{1/2} + 2(51.0\gamma sp)^{1/2}$$

$$50.8(1 + \cos \theta I) = 2(48.5\gamma sd)^{1/2} + 2(2.3\gamma sp)^{1/2}$$

ys: surface free energy
ysd: dispersive component of surface free energy
$\gamma$sp: polar component of surface free energy
$\theta$H: contact angle to water
$\theta$I: contact angle to methylene iodide

[Polyvinyl acetal-based resin]

As described above, the resin composition comprises a polyvinyl acetal-based resin. The polyvinyl acetal-based resin may be a modified polyvinyl acetal resin or may be an unmodified polyvinyl acetal resin. The modified polyvinyl acetal resin has a structure other than an acetal group, a hydroxy group, and an acetyl group as a side chain, for example, as will be described later.

The polyvinyl acetal-based resin is obtained by acetalizing a polyvinyl alcohol with an aldehyde and further

allowing it to react with a modifying agent or to undergo a reacetylation treatment, if required. Also, in order to obtain the modified polyvinyl acetal resin, a modified polyvinyl alcohol may be used as the raw material polyvinyl alcohol.

It is preferable that the above structure other than an acetal group, a hydroxy group, and an acetyl group have, for example, a hydrocarbon group having 2 to 30 carbon atoms, and the hydrocarbon group having 2 to 30 carbon atoms may be linked to the main chain via a linking group such as an ester bond or urethane bond, for example.

Also, the structure other than an acetal group, a hydroxy group, and an acetyl group may be a polyoxyalkylene group. It is preferable that the polyoxyalkylene group have a structure that is linked to the main chain via either an ether bond or $-CH_2O-$. Note that, as for $-CH_2O-$, the carbon atom may be linked to the main chain.

That is, it is preferable that the structure other than an acetal group, a hydroxy group, and an acetyl group be linked to the main chain via any of the following linking groups: an ester bond, an ether bond, $-CH_2O-$, and a urethane bond.

More specifically, it is preferable that the polyvinyl acetal-based resin have at least one selected from the group consisting of functional groups represented by formula (1-1) to formula (1-4) below, and it is more preferable that the polyvinyl acetal-based resin have at least one selected from the group consisting of functional groups represented by formula (1-1) and formula (1-2) below. When the polyvinyl acetal-based resin at least has the functional groups represented by formula (1-1) to formula (1-4), the value of the polar component γsp of the surface free energy is lowered, making it easier to adjust the value in the above predetermined range. In addition, even without a large amount of plasticizer, the glass transition temperature (Tg) of the resin composition can be easily lowered.

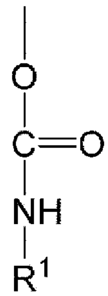

(1-1)

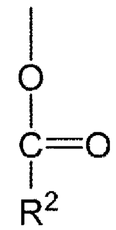

(1-2)

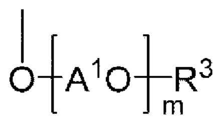

(1-3)

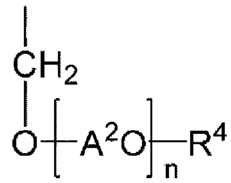

(1-4)

wherein, in formulae (1-1) and (1-2), $R^1$ and $R^2$ are each independently a hydrocarbon group having 2 to 30 carbon atoms. In formulae (1-3) and (1-4), $A^1O$ and $A^2O$ are each independently an oxyalkylene group having 2 to 4 carbon atoms, and m and n are average repeating numbers and are 4 to 200. $R^3$ and $R^4$ are each independently an alkyl group having 1 to 4 carbon atoms or a hydrogen atom. In formulae (1-3) and (1-4), the oxyalkylene group may be one type alone or may be a mixture of two or more types.

The hydrocarbon group in $R^1$ and $R^2$ may have or may not have an aromatic ring, but it is preferable that it be an aliphatic hydrocarbon group not having an aromatic ring. When it is an aliphatic hydrocarbon group, the value of the polar component γsp of the surface free energy can be easily lowered and adhesiveness to the resin material such as polycarbonate can be easily improved. In addition, the aliphatic hydrocarbon group may be linear, may be branched, or may have a ring structure. For example, when the aliphatic hydrocarbon group is branched, the glass transition temperature (Tg) can be easily lowered.

Furthermore, the aliphatic hydrocarbon group may have an unsaturated bond or may not have an unsaturated bond. The aliphatic hydrocarbon group is preferably an alkenyl group, an alkyl group, or an alkynyl group, but it is more preferably an alkyl group.

The number of carbon atoms in each of $R^1$ and $R^2$ is preferably 3 or more, more preferably 5 or more, still more preferably 7 or more, and even more preferably 11 or more. When the number of carbon atoms in each of $R^1$ and $R^2$ is increased, the value of the polar component γsp can be easily lowered and adhesiveness to resin materials with high hydrophobicity, such as polycarbonate, can be easily improved. In addition, the glass transition temperature (Tg) of the resin composition can be easily lowered as well.

From the viewpoint of preventing crystallization or other problems and improving adhesiveness, the number of carbon atoms in each of $R^1$ and $R^2$ is preferably 24 or less, more preferably 20 or less, and still more preferably 18 or less.

Accordingly, $R^1$ and $R^2$ are each preferably an alkyl group having 3 to 24 carbon atoms, more preferably an alkyl group having 5 to 20 carbon atoms, still more preferably an alkyl group having 7 to 18 carbon atoms, and even more preferably an alkyl group having 11 to 18 carbon atoms.

Specific examples of $R^1$ and $R^2$ include a n-propyl group, an isopropyl group, a n-butyl group, a branched butyl group such as a s-butyl group and a t-butyl group, a n-pentyl group, a branched pentyl group, a n-hexyl group, a branched hexyl group, a n-heptyl group, a branched heptyl group such as an isoheptyl group and a 3-heptyl group, a n-octyl group,

a branched octyl group such as an isooctyl group and a 2-ethylhexyl group, a n-nonyl group, a branched nonyl group such as an isononyl group, a n-decyl group, a branched decyl group, a n-undecyl group, a branched undecyl group, a n-dodecyl group, a branched dodecyl group, a n-tridecyl group, a branched tridecyl group, a n-tetradecyl group, a branched tetradecyl group, a n-pentadecyl group, a branched pentadecyl group, a n-hexadecyl group, a branched hexadecyl group, a n-heptadecyl group, a branched heptadecyl group, a n-octadecyl group, a branched octadecyl group, a n-nonadecyl group, a branched nonadecyl group, a n-icosyl group, a branched icosyl group, a n-henicosyl group, a branched henicosyl group, a n-docosyl group, a branched docosyl group, a n-tricosyl group, a branched docosyl group, a n-tetracosyl group, a branched tetracosyl group, and an oleyl group.

In formulae (1-3) and (1-4), $A^1O$ and $A^2O$ are each independently an oxyalkylene group having 2 to 4 carbon atoms. The oxyalkylene group having 2 to 4 carbon atoms is an oxyethylene group, an oxypropylene group, or an oxybutylene group, preferably an oxyethylene group or an oxypropylene group, and more preferably an oxyethylene group. Note that two or more types of oxyalkylene groups may be used in combination, and in such a case, each oxyalkylene group may be added in a random manner or may be added in a block manner.

m and n represent the average repeating numbers of oxyalkylene groups, and are 4 to 200, preferably 4 to 100, more preferably 4 to 50, still more preferably 5 to 40, and particularly preferably 8 to 20.

In addition, examples of the alkyl group in $R^3$ and $R^4$ include a methyl group, an ethyl group, a n-propyl group, an isopropyl group, a n-butyl group, a s-butyl group, and a t-butyl group. Also, $R^3$ and $R^4$ are each independently an alkyl group having 1 to 4 carbon atoms or a hydrogen atom, but preferably an alkyl group having 1 to 2 carbon atoms, more preferably a methyl group or a hydrogen atom, and still more preferably a hydrogen atom.

Accordingly, it is particularly preferable that the functional group represented by formula (1-3) be a functional group represented by $-O-(CH_2CH_2O)_m-H$, and it is particularly preferable that the functional group represented by formula (1-4) be a functional group represented by $-CH_2O-(CH_2CH_2O)_n-H$. Note that the suitable ranges of m and n in these cases are also as described above.

The polyvinyl acetal-based resin typically has acetal groups, hydroxy groups, and acetyl groups. However, when the polyvinyl acetal-based resin is modified by functional groups or subjected to a reacetylation reaction, it does not need to contain hydroxy groups.

In addition, it is preferable that the polyvinyl acetal-based resin have, by modification, at least one functional group selected from the group consisting of the functional groups represented by the above formula (1-1) to formula (1-4), as described above.

Note that, hereinafter, the polyvinyl acetal-based resin having any of the functional groups represented by the above formula (1-1) to formula (1-4) may be described as a polyvinyl acetal-based resin (A) in order to distinguish it from other polyvinyl acetal-based resins.

In addition, the polyvinyl acetal-based resin having any of the functional groups represented by the above formula (1-1) and formula (1-2) may be described as a polyvinyl acetal-based resin (A-1) in order to distinguish it from other polyvinyl acetal-based resins.

Furthermore, the polyvinyl acetal-based resin having any of the functional groups represented by the above formula (1-3) and formula (1-4) may be described as a polyvinyl acetal-based resin (A-2) in order to distinguish it from other polyvinyl acetal-based resins.

In the polyvinyl acetal-based resin (A), the amount of modification by the functional groups represented by formula (1-1) to formula (1-4) is, for example, 0.2 mol% or more and 25 mol% or less, and preferably 0.3 mol% or more and 25 mol% or less. When the amount of modification is in the above range, the glass transition temperature (Tg) can be easily lowered, and the adhesiveness of the interlayer film to organic glass such as polycarbonate plates can be easily improved. The suitable value of the amount of modification by the functional groups represented by the above formula (1-1) to formula (1-4) depends on the types of functional groups.

In the polyvinyl acetal-based resin (A-1), it is preferable that the amount of modification by the functional groups represented by formula (1-1) and formula (1-2) be 5 mol% or more and 25 mol% or less. When the amount of modification is 5 mol% or more, the value of the polar component γsp and the glass transition temperature (Tg) can be easily lowered, and adhesiveness to resin materials with high hydrophobicity, such as polycarbonate can be easily improved. In addition, when the amount of modification is 25 mol% or less, the polar component γsp is prevented from being too low, and adhesiveness can be easily improved.

From these viewpoints, the amount of modification by the functional groups represented by formula (1-1) and formula (1-2) is more preferably 6 mol% or more, still more preferably 8 mol% or more, and even more preferably 10 mol% or more, and also more preferably 22 mol% or less, and still more preferably 18 mol% or less.

In addition, for example, from the viewpoint of improving adhesiveness described above, in the polyvinyl acetal-based resin (A-2) having any of the functional groups represented by formula (1-3) and formula (1-4), the amount of modification by the functional groups represented by formula (1-3) and formula (1-4) is preferably 0.2 mol% or more and 12 mol% or less. Also, the amount of modification by the functional groups represented by formula (1-3) and formula (1-4) is more preferably 0.3 mol% or more, still more preferably 0.4 mol% or more, and even more preferably 0.5 mol%

or more, and also more preferably 10 mol% or less, still more preferably 8 mol% or less, and even more preferably 6 mol% or less.

Note that the amount of modification by each functional group represents the proportion of each functional group with respect to the entire vinyl monomer units constituting the polyvinyl acetal-based resin, and for example, the amount of modification by the functional groups represented by formula (1-1) and formula (1-2) represents the total proportion of these functional groups. Note that the amount of modification can be determined by carrying out proton NMR measurement on the polyvinyl acetal-based resin and calculating it from the obtained spectrum. The degree of acetalization, the amount of hydroxy groups, and the degree of acetylation, as will be described later, can also be determined in the same manner by carrying out proton NMR measurement and calculating them from the obtained spectrum.

The polyvinyl acetal-based resin may not have the functional groups represented by formulae (1-1) to (1-4) described above. Such a polyvinyl acetal-based resin may be a modified polyvinyl acetal resin having a functional group other than the functional groups represented by formulae (1-1) to (1-4), or it may be an unmodified polyvinyl acetal resin. Even when it is an unmodified polyvinyl acetal resin, the value of the polar component γsp and the glass transition temperature (Tg) can be easily lowered by reducing the amount of hydroxy groups by a reacetylation reaction or other means, as will be described later.

The polyvinyl acetal-based resin has vinyl group-derived constituent units as the main chain, and the functional groups represented by formulae (1-1) to (1-4) may be those bonded to the vinyl group-derived constituent units constituting the main chain. Accordingly, it is preferable that the polyvinyl acetal-based resin have any of the constituent units represented by formula (2-1) to formula (2-4) below, and it is more preferable that it have any of the constituent units represented by the following formula (2-1) and formula (2-2) below.

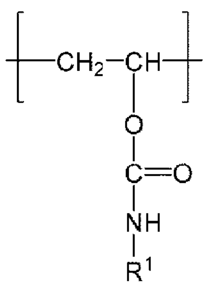
(2-1)

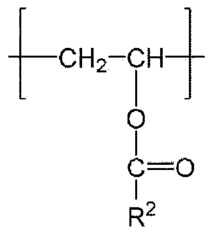
(2-2)

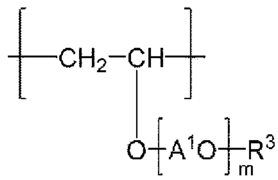
(2-3)

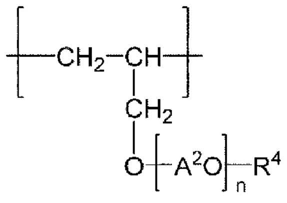
(2-4)

wherein, in formulae (2-1) and (2-2), $R^1$ and $R^2$ are each the same as described above. In formulae (2-3) and (2-4), $A^1O$, $A^2O$, m, n, $R^3$, and $R^4$ are each the same as described above.

The polyvinyl acetal-based resin typically has acetal groups, hydroxy groups, and acetyl groups, and that is, the polyvinyl acetal-based resin typically has the constituent units represented by formula (3-1), formula (3-2), and formula (3-3) below. Accordingly, it is preferable that the modified polyvinyl acetal resin have the constituent units represented by formula (3-1), formula (3-2), and formula (3-3) below and at least one constituent unit selected from the group consisting of formula (2-1) to formula (2-4) described above. Above all, it is more preferable that the modified polyvinyl acetal resin have the constituent units represented by formula (3-1), formula (3-2), and formula (3-3) below and at least one constituent unit selected from the group consisting of formula (2-1) and formula (2-2) described above.

However, when the polyvinyl acetal-based resin is an unmodified polyvinyl acetal resin, for example, it does not need to have hydroxy groups as described above, and it does not need to have the constituent unit represented by formula (3-2). That is, the unmodified polyvinyl acetal resin has the constituent units represented by formula (3-1) and formula (3-3) below, and may also optionally have the constituent unit represented by formula (3-2) below.

In addition, the polyvinyl acetal-based resin may be composed of the constituent units represented by formula (3-1), formula (3-2), and formula (3-3) below, or the constituent units represented by formula (3-1) and formula (3-3) below, and at least one constituent unit selected from the group consisting of formula (2-1) to formula (2-4) described above, but it may have a constituent unit having a functional group other than these.

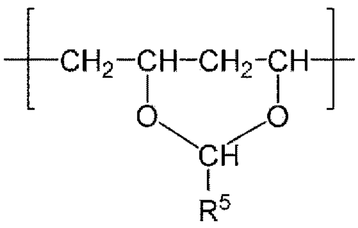
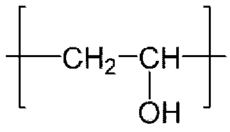
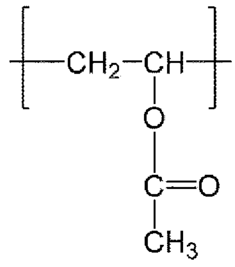

(3-1) (3-2) (3-3)

wherein, in formula (3-1), $R^5$ represents a hydrogen atom or a hydrocarbon group having 1 to 19 carbon atoms.

As described above, the polyvinyl acetal-based resin is obtained by acetalizing a polyvinyl alcohol or a modified polyvinyl alcohol, which is formed by modifying a polyvinyl alcohol, with an aldehyde, followed by modification if required, and as the polyvinyl alcohol, a polyvinyl alcohol with a degree of saponification of 80 to 99.8 mol% is generally used. In addition, the average degree of polymerization of the polyvinyl alcohol is preferably 300 or more and 5000 or less in order to adjust the average degree of polymerization of the polyvinyl acetal-based resin in the desired range. The average degree of polymerization of the polyvinyl alcohol can be determined by a method in accordance with JIS K6726 "Testing Methods for Polyvinyl Alcohol".

The number of carbon atoms in the acetal group contained in the polyvinyl acetal-based resin is not particularly limited, but as represented by the above formula (3-1), it is 1 to 20, for example, preferably 2 to 10, more preferably 2 to 6, and still more preferably 2, 3, or 4. Accordingly, the number of carbon atoms in $R^5$ represented in the above formula (3-1) is preferably 1 to 9, more preferably 1 to 5, and still more preferably 1 to 3.

As the acetal group, specifically, a butyral group is particularly preferred, and accordingly, a polyvinyl butyral-based resin is preferred as the polyvinyl acetal-based resin. The degree of acetalization (that is, amount of acetal) of the polyvinyl acetal-based resin is preferably 40 mol% or more and 85 mol% or less. In addition, the degree of acetalization is more preferably 55 mol% or more, and still more preferably 60 mol% or more, and also more preferably 75 mol% or less, and still more preferably 70 mol% or less. When the degree of acetalization is in these ranges, it is easier to allow the functional groups represented by formula (1-1), formula (1-2), formula (1-3), and formula (1-4) to be contained in a certain amount while keeping the amount of hydroxy groups in a moderate amount.

Note that the degree of acetalization means the degree of acetoacetalization when the acetal group of the polyvinyl acetal-based resin is an acetoacetal group, and it means the degree of butyralization when the acetal group is a butyral group.

In addition, the degree of acetalization represents the proportion of acetalized vinyl alcohol units with respect to the entire vinyl monomer units constituting the polyvinyl acetal-based resin.

The amount of hydroxy groups in the polyvinyl acetal-based resin is preferably 35 mol% or less. When the amount of hydroxy groups is 35 mol% or less, the polar component ysp is prevented from being high, and the glass transition temperature (Tg) can also be easily lowered. From the viewpoint of lowering the polar component ysp and the glass transition temperature (Tg) and enhancing adhesiveness to resin materials with high hydrophobicity such as polycarbonate, in the case of the polyvinyl acetal-based resin (A) (for example, resin (A-1) or resin (A-2)), the amount of hydroxy groups is more preferably 30 mol% or less, and still more preferably 25 mol% or less.

The amount of hydroxy groups in the polyvinyl acetal-based resin may be 0 mol% or more, but in the case of the polyvinyl acetal-based resin (A) (for example, resin (A-1) or resin (A-2)), it may contain a certain amount of hydroxy groups from the viewpoint of preventing the resin composition from being too flexible, and for example, the amount of hydroxy groups is 5 mol% or more, preferably 9 mol% or more, more preferably 14 mol% or more, and still more preferably 16 mol% or more.

In addition, when the polyvinyl acetal-based resin is an unmodified polyvinyl acetal resin, for example, the amount of hydroxy groups needs to be reduced in order to prevent the polar component ysp from being high and to lower the glass transition temperature (Tg). Therefore, the amount of hydroxy groups in the unmodified polyvinyl acetal resin is preferably 15 mol% or less, more preferably 10 mol% or less, still more preferably 5 mol% or less, even more preferably 3 mol% or less, and most preferably 0 mol%.

Note that the amount of hydroxy groups represents the proportion of hydroxy groups with respect to the entire vinyl monomer units constituting the polyvinyl acetal-based resin.

The degree of acetylation (amount of acetyl groups) of the above polyvinyl acetal-based resins is, for example, 0.01 mol% or more and 50 mol% or less, but in the case of the polyvinyl acetal-based resin (A) (for example, resin (A-1) or resin (A-2)), in order to keep the amount of modification by the functional groups represented by formula (1-1) to formula (1-4) at or above a certain value, the degree of acetylation may also be kept at or below a certain value.

Accordingly, the degree of acetylation of the polyvinyl acetal-based resin (A) (for example, resin (A-1) or resin (A-2)) is preferably 20 mol% or less, more preferably 15 mol% or less, still more preferably 12 mol% or less, and even more preferably 5 mol% or less.

In addition, the degree of acetylation of the polyvinyl acetal-based resin (A) (for example, resin (A-1) or resin (A-2)) is, for example, 0.01 mol% or more as described above, but it is preferably 0.1 mol% or more, and more preferably 0.5 mol% or more.

In addition, from the viewpoint of reducing the amount of hydroxy groups, increasing the polar component γsp, and lowering the glass transition temperature (Tg), in the case of the unmodified polyvinyl acetal resin, its degree of acetylation may be at or above a certain value, and it is preferably 15 mol% or more, more preferably 25 mol% or more, and still more preferably 33 mol% or more. Also, the degree of acetylation of the unmodified polyvinyl acetal resin is, for example, 50 mol% or less as described above, but it is preferably 45 mol% or less, and still more preferably 42 mol% or less.

Note that the degree of acetylation represents the proportion of acetyl groups with respect to the entire vinyl monomer units constituting the polyvinyl acetal-based resin.

The average degree of polymerization of the polyvinyl acetal-based resin is preferably 300 or more and 5000 or less. By adjusting the average degree of polymerization in the above range, adhesiveness can be easily improved while maintaining mechanical strength, flexibility, and other properties well. From these viewpoints, the average degree of polymerization of the polyvinyl acetal-based resin is more preferably 500 or more, still more preferably 700 or more, and even more preferably 1500 or more. In addition, the average degree of polymerization is more preferably 4500 or less, still more preferably 4000 or less, and even more preferably 3500 or less.

Note that the average degree of polymerization of the polyvinyl acetal-based resin is the same as the average degree of polymerization of the raw material polyvinyl alcohol, and can be determined from the average degree of polymerization of the polyvinyl alcohol.

The aldehyde used in producing the polyvinyl acetal-based resin is not particularly limited, and is, for example, an aldehyde having 1 to 20 carbon atoms, but in general, an aldehyde having 2 to 10 carbon atoms is suitably used. The above aldehyde having 2 to 10 carbon atoms is not particularly limited, and examples thereof include acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Above all, aldehydes having 2 to 6 carbon atoms such as acetaldehyde, n-butyraldehyde, n-hexylaldehyde, and n-valeraldehyde are preferred, aldehydes having 2, 3 and 4 carbon atoms are more preferred, and n-butyraldehyde is still more preferred. These aldehydes may be used alone, or two or more types thereof may be used in combination.

The polyvinyl acetal-based resin used in the present invention may be used alone as one type, or two or more types thereof may be used in combination.

The resin composition of the present invention may contain a resin other than the polyvinyl acetal-based resin as the resin as long as the effects of the present invention are achieved. Examples of such a resin component include a thermoplastic resin other than the polyvinyl acetal-based resin. However, the polyvinyl acetal-based resin may be the main component. Examples of the thermoplastic resin other than the polyvinyl acetal-based resin include an acrylic resin.

Specifically, the total amount of the polyvinyl acetal-based resin is, for example, 50% by mass or more, preferably 70% by mass or more, more preferably 90% by mass or more, and most preferably 100% by mass based on the entire amount of the resin contained in the resin composition. Accordingly, the resin contained in the resin composition of the present invention may consist only of the polyvinyl acetal-based resin.

(Plasticizer)

The resin composition of the present invention may contain a plasticizer. When the resin composition contains a plasticizer, it becomes flexible, and the glass transition temperature (Tg) of the resin composition can be lowered and adhesiveness to a variety of adherends, such as organic glass and other resin materials and inorganic glass, can be enhanced. However, it is preferable that the resin composition of the present invention do not contain any plasticizer, or even if it does, only in a small amount. When the resin composition contains a plasticizer only in a small amount or does not contain any plasticizer, the value of the polar component γsp of the surface free energy can be prevented from being too high, and even when the resin composition is used for a long period of time in contact with resin materials with low polarity, such as polycarbonate, the resin materials can be prevented from being corroded by the plasticizer. Therefore, even after use for a long period of time, the transparency of the resin material or other materials can be easily ensured. Furthermore, bleeding of the plasticizer can be suppressed.

In addition, even when the resin composition of the present invention contains a small amount of or no plasticizer, by keeping the glass transition temperature (Tg) and the value of the polar component γsp of the surface free energy in predetermined ranges, adhesiveness to resin materials such as polycarbonate can be made good.

The content of the plasticizer in the resin composition is preferably 10 parts by mass or less, more preferably 5 parts by mass or less, still more preferably 3 parts by mass or less, and even more preferably 1 part by mass or less

based on 100 parts by mass of the resin contained in the resin composition. The lower limit of the content of the plasticizer is 0 parts by mass.

When the polyvinyl acetal-based resin (A), that is, resin (A-1) or resin (A-2) is used, it is most preferable that the resin composition of the present invention do not contain any plasticizer, that is, the content of the plasticizer be 0 parts by mass. On the other hand, when an unmodified polyvinyl acetal resin is used, the resin composition may contain a plasticizer from the viewpoint of lowering the glass transition temperature (Tg) of the resin composition and improving adhesiveness.

Examples of the plasticizer include an organic ester plasticizer, as well as a phosphorus plasticizer such as an organophosphate plasticizer and an organophosphite plasticizer. The plasticizer may be used alone as one type, or two or more types thereof may be used in combination. Above all, the organic ester plasticizer is preferred. Examples of the organic ester plasticizer include a monobasic organic acid ester and a polybasic organic acid ester.

Examples of the monobasic organic acid ester include an ester of a glycol and a monobasic organic acid. Examples of the glycol include a polyalkylene glycol in which each alkylene unit has 2 to 4 carbon atoms, preferably 2 or 3 carbon atoms, and the repeating number of the alkylene unit is 2 to 10, preferably 2 to 4. In addition, the glycol may be a monoalkylene glycol (that is, thenumber of repeating unit is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples thereof include butyric acid, isobutyric acid, caproic acid, 2-ethylbutyric acid, heptylic acid, n-octylic acid, 2-ethylhexylic acid, n-nonylic acid, and decylic acid.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2 -ethylbutyrate.

In addition, examples of the polybasic organic acid ester include an ester compound of a dibasic organic acid having 4 to 12 carbon atoms, such as adipic acid, sebacic acid, and azelaic acid, and an alcohol having 4 to 10 carbon atoms. The alcohol having 4 to 10 carbon atoms may be linear, may have a branched structure, or may have a cyclic structure.

Specific examples thereof include dibutyl sebacate, dioctyl azelate, dihexyl adipate, dioctyl adipate, hexyl cyclohexyl adipate, diisononyl adipate, heptyl nonyl adipate, dibutyl carbitol adipate, and a mixed adipate ester.
Alternatively, it may be an oil-modified sebacic alkyd. Examples of the mixed adipate ester include an adipate ester fabricated from two or more alcohols selected from the group consisting of alkyl alcohols having 4 to 9 carbon atoms and cyclic alcohols having 4 to 9 carbon atoms.

Examples of the above organic phosphate plasticizer include a phosphate ester such as tributoxyethyl phosphate, isodecyl phenyl phosphate, and triisopropyl phosphate.

Among the above, triethylene glycol-di-2-ethylhexanoate (3GO) is particularly suitably used as the plasticizer.

In addition to the plasticizer, the resin composition may also contain other known additives that are used in combination with polyvinyl acetal-based resins, as appropriate. That is, the resin composition may consist of a resin such as the polyvinyl acetal-based resin, but may also contain, in addition to the resin, a plasticizer compounded if required, or additives other than the plasticizer.

Specific examples of the additives other than the plasticizer include an ultraviolet absorber, an infrared absorber, an antioxidant, a light stabilizer, an adhesive force adjuster, a pigment, a dye, a fluorescent whitening agent, and a crystal nucleating agent. In addition, the resin composition may be diluted with a solvent and used in the form of a diluted solution.

[Method for producing polyvinyl acetal-based resin]

The polyvinyl acetal-based resin used in the resin composition of the present invention is obtained by acetalizing a polyvinyl alcohol (also referred to as a "raw material polyvinyl alcohol") with an aldehyde and then allowing it to react with a modifying agent or to undergo a reacetylation treatment, if required. The raw material polyvinyl alcohol may be an unmodified polyvinyl alcohol, but in the case of obtaining a modified polyvinyl acetal resin, a modified polyvinyl alcohol may be used as the raw material polyvinyl alcohol.

Specifically, for example, when producing the polyvinyl acetal-based resin having at least one selected from

the group consisting of the functional groups represented by the above formula (1-1) and formula (1-2) (polyvinyl acetal-based resin (A-1)), it is preferable to produce it by the production method (1) below.

(Production method (1))

In the present production method (1), the raw material polyvinyl alcohol is acetalized with an aldehyde to obtain a polyvinyl acetal-based resin (hereinafter, also referred to as a raw material polyvinyl acetal-based resin). The raw material polyvinyl alcohol used here is obtained by saponifying a polyvinyl ester, and it is preferably an unmodified polyvinyl alcohol.

Next, a modifying agent having $R^1$ or $R^2$ is allowed to react with the above raw material polyvinyl acetal-based resin to introduce at least any of the functional groups represented by formula (1-1) and formula (1-2) into the raw material polyvinyl acetal-based resin. Here, the modifying agent may be a compound having a reactive group that reacts with a hydroxy group that the raw material polyvinyl acetal-based resin has to form a urethane bond represented in formula (1-1) or an ester bond represented in formula (1-2).

Specific examples of the compound having reactivity to react with a hydroxy group to form a urethane bond include an isocyanate compound represented by $R^1$-NCO (where $R^1$ is the same as described above). The isocyanate compound has high reactivity with a hydroxy group that the raw material polyvinyl acetal-based resin has, and the functional group represented by formula (1-1) can be readily introduced.

Also, examples of the compound having a reactive group that reacts with a hydroxy group to form an ester bond include a carboxylic acid represented by $R^2$-COOH (where $R^2$ is the same as described above), or a carboxylic acid derivative such as a carboxylic anhydride, a carboxylate ester, and a carboxylic acid halide. Among these, a carboxylic acid halide represented by $R^2$-COX (where $R^2$ is the same as described above and X is a halogen atom) is preferred, and a carboxylic acid chloride where X is a chlorine atom is more preferred. The carboxylic acid halide such as a carboxylic acid chloride has high reactivity with a hydroxy group that the raw material polyvinyl acetal-based resin has, and the functional group represented by formula (1-2) can be readily introduced.

Specific examples of the preferred isocyanate compound include hexyl isocyanate, 2-ethylhexyl isocyanate, n-octyl isocyanate, n-nonyl isocyanate, n-decyl isocyanate, n-undecyl isocyanate, n-dodecyl isocyanate, n- tetradecyl isocyanate, n-hexadecyl isocyanate, n-octadecyl isocyanate, and n-icosyl isocyanate, and n-octadecyl isocyanate is preferred.

Also, examples of the preferred carboxylic acid chloride include 2-ethylhexanoyl chloride, n-octanoyl chloride, n-nonanoyl chloride, n-decanoyl chloride, n-undecanoyl chloride, lauroyl chloride, myristyl chloride, palmitoyl chloride, isopalmitoyl chloride, stearoyl chloride, isostearoyl chloride, oleoyl chloride, and behenic acid chloride. Among these, preferred is any of the following: 2-ethylhexanoyl chloride, lauroyl chloride, myristyl chloride, palmitoyl chloride, and stearoyl chloride, and more preferred are lauroyl chloride, myristyl chloride, and palmitoyl chloride.

In the above production method (1), the reaction of the raw material polyvinyl acetal-based resin and the modifying agent such as isocyanate compound or carboxylic acid halide is not particularly limited, but it may be carried out by, for example, heating the raw material polyvinyl acetal-based resin and the modifying agent in a solvent at, for example, 30°C or higher and 150°C or lower, preferably at about 50°C or higher and 140°C or lower. The reaction may be carried out in the presence of a base or an acid, and for example, pyridine or the like is used as the base.

However, the method for producing the polyvinyl acetal-based resin (A-1) is not limited to the above, and it may be produced by the production method (2) below.

(Production method 2)

In the present production method (2), at first, a modified polyvinyl alcohol is produced as the raw material polyvinyl alcohol. Specifically, a modifying agent is allowed to react with an unmodified polyvinyl alcohol obtained by saponifying a polyvinyl ester to introduce the functional group of formula (1-1) or formula (1-2) into some of the side chains of the polyvinyl alcohol. Note that specific examples of the modifying agent are as exemplified in the above production method (1). Then, the obtained modified polyvinyl alcohol is acetalized with an aldehyde to obtain the polyvinyl acetal-based resin (A-1).

Also, for example, when producing the polyvinyl acetal-based resin having at least any of the functional groups represented by the above formula (1-3) and formula (1-4) (modified polyvinyl acetal resin (A-2)), it is preferable to produce it by the production method (3) below.

(Production method (3))

In the present production method (3), at first, a polyoxyalkylene-modified polyvinyl alcohol is produced as the raw material polyvinyl alcohol. Specifically, it is obtained by polymerizing a vinyl ester and a monomer including a vinyl

monomer having a polyoxyalkylene group to obtain a polymer, and then saponifying the polymer. For the saponification, an alkali or an acid is generally used, but it is preferable to use an alkali. As the PVA-based polymer, only one type may be used, or two or more types thereof may be used in combination.

Next, the polyoxyalkylene-modified polyvinyl alcohol obtained as described above may be acetalized with an aldehyde to obtain the modified polyvinyl acetal resin (A-2). The method for acetalization may be carried out by known methods.

As the vinyl ester used in the production method (3), vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, and others can be used. Among these, vinyl acetate is preferred.

In addition, specific examples of the vinyl monomer having a polyoxyalkylene group used in the production method (3) include a polyoxyalkylene vinyl ether represented by formula (4-1) below, and a polyoxyalkylene allyl ether represented by formula (4-2) below.

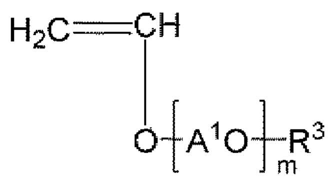

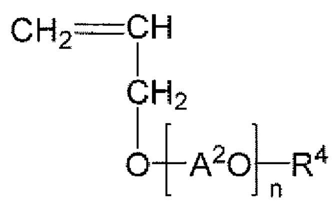

(4-1) (4-2)

wherein, in formulae (4-1) and (4-2), $A^1O$, $A^2O$, m, n, $R^3$, and $R^4$ are each the same as described above.

Preferred specific examples of the vinyl monomer having a polyoxyalkylene group include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, and polyoxypropylene monoallyl ether, and among these, polyoxyethylene monovinyl ether, polyoxyethylene monoallyl ether, polyoxypropylene monovinyl ether, polyoxypropylene monoallyl ether are more preferred.

In addition, in the case of an unmodified polyvinyl acetal resin, it is preferable that it be produced by the production method (4) below.

(Production method (4))

In the present production method (4), the raw material polyvinyl alcohol is acetalized with an aldehyde to obtain a polyvinyl acetal-based resin (hereinafter, also referred to as a raw material polyvinyl acetal-based resin). Here, an unmodified polyvinyl alcohol obtained by saponifying a polyvinyl ester is used as the raw material polyvinyl alcohol. Next, the raw material polyvinyl acetal-based resin may be subjected to a reacetylation treatment to obtain the unmodified polyvinyl acetal resin. The reacetylation treatment may be carried out by conventionally known methods, and it may be carried out using acetic anhydride in the presence of a base such as pyridine. In addition, the reacetylation treatment may be carried out by heating to, for example, 50°C or higher and 100°C or lower, preferably to about 70°C or higher and 90°C or lower. When the polyvinyl acetal-based resin is subjected to the reacetylation treatment, the amount of hydroxy groups is reduced, and the value of the polar component ysp of the surface free energy and the glass transition temperature (Tg) can be easily lowered.

[Method for producing resin composition]

As for the resin composition of the present invention, the polyvinyl acetal-based resin produced as described above can be used as it is as the resin composition. Also, the resin composition may be prepared by adding a plasticizer, additives, and other agents to the polyvinyl acetal-based resin produced as described above, if required. In addition, the resin composition may be diluted in a solvent as appropriate for use.

<Resin film>

The resin composition of the present invention may be used in any form, but it is preferable to use it in the form of a film. That is, the present invention provides a resin film formed of the resin composition described above. Note that,

in the present specification, the term "resin film" refers not only to the case of resin film alone, but also to the case where resin film is laminated or covered on another member into the form of a layer or film, and the case where the thickness is relatively large, generally called a sheet, is also called resin film. The thickness of the resin film is not particularly limited, but it is, for example, 100 $\mu$m or more and 2000 $\mu$m or less, and preferably 250 $\mu$m or more and 900 $\mu$m or less.

The resin film of the present invention may be one composed of a single layer using a resin film formed of the resin composition described above as a first layer, or it may constitute a multilayer film. The multilayer film may have at least one layer of the resin film of the present invention described above as a first layer. For example, the multilayer film may be a laminate of a first layer formed of the resin composition of the present invention described above and a layer other than the first layer formed of a material other than the resin composition of the present invention (hereinafter, also referred to as a "second layer"). Note that it is preferable that the layer other than the first layer be a resin layer containing a thermoplastic resin.

Alternatively, the multilayer film may be a laminate having two or more layers of the first layer formed of the resin composition of the present invention described above, and even in that case, the laminate may have a layer (second layer) formed of compositional features other than those of the resin composition of the present invention.

The second layer has compositional features and physical properties different from those of the above first layer, and is preferably a resin layer containing a thermoplastic resin. Examples of the thermoplastic resin include a polyvinyl acetal-based resin, an acrylic resin, an ethylene-vinyl acetate copolymer resin, an ionomer resin, a polyurethane resin, and a thermoplastic elastomer. By using these resins, adhesiveness to glass plates or the first layer can be easily ensured. The thermoplastic resin may be used alone as one type, or two or more types thereof may be used in combination.

In addition, the second layer may be a layer formed of a resin composition consisting of the thermoplastic resin, or a resin composition containing, in addition to the thermoplastic resin, a plasticizer and additives other than the plasticizer, as appropriate.

The resin film of the present invention may be used in any application, but it is preferably used in applications where transparency, light transmission, and other properties are required. Specifically, it may be used for transparent protective films used to protect optical members and other materials, films for optical members that constitute part of optical members, resin films for glass used for glass materials such as organic glass and inorganic glass, adhesive films, sticky films, dispersants for optical members, binders for optical members, and other applications.

Also, it is preferable for the resin film of the present invention to be laminated for use so as to be in contact with resin materials such as polycarbonate and methacrylate, and it is more preferable to be laminated for use so as to be in contact with glass plates composed of organic glass.

As described above, the resin composition of the present invention comprises a polyvinyl acetal-based resin, the resin composition has a low glass transition temperature, and the value of the polar component γsp of the surface free energy is in a predetermined range. Therefore, the resin film formed of the resin composition of the present invention has, when used in contact with resin materials with high hydrophobicity, such as polycarbonate, for example, has good adhesiveness to the resin materials. It can also prevent corrosion of the resin materials, thus providing good transparency.

It is preferable that the resin film of the present invention be used as an interlayer film for laminated glass (hereinafter, this may be simply referred to as an "interlayer film"). The interlayer film is disposed between two laminated glass members and is used to allow the two laminated glass members to adhere to each other. As will be described later, it is preferable that at least one of the two laminated glass members be a glass plate composed of organic glass, such as a polycarbonate plate. Details on the case where the resin film is used in the interlayer film will be described later.

[Method for fabricating resin film]

The resin film can be produced by molding the resin composition into the form of a film by known methods. Specifically, the resin composition may be applied to a support such as a release sheet, or poured into a mold, heated and dried as appropriate if required, and molded into the form of a sheet, or it may be molded by extrusion molding, press molding, or other methods.

Also, when the polyvinyl acetal-based resin is obtained by allowing a raw material polyvinyl acetal-based resin to react with a modifying agent, as described above, it may be molded as follows. That is, a composition containing the raw material polyvinyl acetal-based resin, the modifying agent, and other additives such as a plasticizer compounded if required, may be applied onto a support such as a release sheet, or poured into a mold, and then heated, thereby allowing the modifying agent to react with the raw material polyvinyl acetal-based resin and molding the composition into the form of a film.

Furthermore, when the resin film has a multilayer structure, a resin composition for obtaining a layer other than the first layer (second layer) may also be prepared, and the second layer may be obtained from that resin composition. In the case of a multilayer structure, the first layer and the second layer may be overlapped as appropriate to obtain the interlayer film, or the multilayer structure may be molded by co-extrusion or other methods.

<Interlayer film for laminated glass>

An interlayer film of the present invention comprises the first layer formed of the resin composition of the present invention, as described above. The interlayer film may specifically be an interlayer film 30A composed solely of a first layer 31 formed of the resin composition described above, as shown in Fig. 1. When the interlayer film is composed solely of the first layer 31, both sides of the first layer 31 constitute the outermost surfaces in contact with a pair of laminated glass members (first and second laminated glass members 41 and 42) that constitute laminated glass. Therefore, when one or both of the first and second laminated glass members 41 and 42 are organic glass, while improving the adhesiveness of the interlayer film 30A to the organic glass, corrosion of the organic glass by the interlayer film can be effectively prevented and the transparency of the laminated glass and other properties can also be easily ensured. Note that, as will be described later, the organic glass is preferably a polycarbonate plate or a methacrylate plate, and it is particularly preferably a polycarbonate plate.

Alternatively, the interlayer film may have a multilayer structure at least including the first layer formed of the resin composition described above. The interlayer film with a multilayer structure may have at least one layer of the first layer. However, even in the case of a multilayer structure, it is preferable that the first layer constitute an outermost surface of the interlayer film. When the first layer constitutes an outermost surface and is disposed at a position in contact with a laminated glass member that is organic glass, corrosion of the organic glass by the interlayer film can be effectively prevented while improving the adhesiveness of the interlayer film to the organic glass.

Also, in the case of a multilayer structure, the interlayer film may have two or more layers of the first layer, and by having two or more layers, both of the two outermost surfaces of the interlayer film can be constituted by the first layers, even in the case of a multilayer structure. When the interlayer film has two or more layers of the first layer, the compositional features of each layer may be different, or may be the same.

Alternatively, the interlayer film may have a laminated structure having the first layer and a layer other than the first layer described above (second layer). In this case, one of the outermost surfaces may be constituted by the first layer and the other outermost surface by the second layer, or both of the outermost surfaces may be constituted by the first layers.

When the interlayer film has the first layer and the second layer, for example, it may be an interlayer film 30B with a two-layer structure of a first layer 31 and a second layer 32 as shown in Fig. 2, it may be an interlayer film 30C with a three-layer structure in which a first layer 31A, a second layer 32, and a first layer 31B are provided in sequence as shown in Fig. 3, or it may have a structure with three or more layers. Note that the details of the second layer are as described above.

When one of the outermost surfaces of the interlayer film is constituted by the first layer and the other outermost surface is constituted by the second layer, it is preferable that a laminated glass member in contact with one outermost surface be constituted by organic glass and a laminated glass member in contact with the other outermost surface be constituted by inorganic glass. Accordingly, in the interlayer film 30B shown in Fig. 2, it is preferable that a first laminated glass member 41 in contact with the first layer 31 be organic glass and a second laminated glass member 42 in contact with the second layer 32 be inorganic glass.

This can effectively prevent corrosion of the organic glass by the interlayer film while enhancing the adhesive force of the interlayer film to the organic glass. In addition, the second layer enables the interlayer film to adhere to the inorganic glass with a high adhesive force as well, and as a result, the interlayer film can adhere to any of the laminated glass members with a high adhesive force.

Alternatively, when the interlayer film has a multilayer structure and both of the outermost surfaces are constituted by the first layers, it is preferable that a laminated glass member in contact with one outermost surface be constituted by organic glass and a laminated glass member in contact with the other outermost surface be constituted by either inorganic glass or organic glass. However, it is more preferable that both of the laminated glass members in contact with both outermost surfaces be constituted by organic glass.

Accordingly, in the interlayer film 30C shown in Fig. 3, it is preferable that a first laminated glass member 41 in contact with one first layer 31A be organic glass and a second laminated glass member 42 in contact with the other first layer 31B be organic glass or inorganic glass, but it is more preferable that both of the first and second laminated glass members 41 and 42 be organic glass. The above configuration can effectively prevent corrosion of the organic glass by the interlayer film while enhancing the adhesive force of the interlayer film 30 to the organic glass.

However, the laminated glass members are not limited to organic glass or inorganic glass, and an organic film (resin film) may be used as well, and a similar aspect can also be achieved by using an organic film instead of the organic glass described above.

(Adhesive force of interlayer film)

In the present invention, it is preferable that the adhesive force of a laminated glass sample obtained by

compression-bonding a pair of polycarbonate plate glass in accordance with JIS K6735 at 80°C via the above interlayer film be 100 N/225 mm$^2$ or more. When the above adhesive force is 100 N/225 mm$^2$ or more, adhesiveness to organic glass such as polycarbonate plates is sufficiently high. From the viewpoint of ensuring a higher adhesive force, it is more preferable that the above adhesive force be 180 N/225 mm$^2$ or more. In addition, when the adhesive force of a laminated glass sample obtained by compression-bonding at 80°C is relatively high as described above, a sufficient adhesive force can be ensured even when thermocompression bonding is performed at relatively low temperatures, thus improving the productivity of laminated glass.

Note that the method for measuring the adhesive force is carried out on a laminated glass sample obtained by passing through the following first, second, and third processes in this order.

First process: An interlayer film of 15 mm in length and 15 mm in width is prepared, and two sheets of polycarbonate plate glass of 2 mm in thickness, 25 mm in length, and 100 mm in width in accordance with JIS K6735 are also prepared. The two sheets of polycarbonate plate glass are disposed so that their longitudinal directions are perpendicular to each other, and they are overlapped crosswise via the interlayer film.

Second process: Using a spacer of the same thickness as the interlayer film so that the thickness of the interlayer film is constant, the two sheets of polycarbonate plate glass that have been overlapped via the interlayer film are temporarily compression-bonded for 3 minutes under conditions of 80°C and 0.1 MPa in a vacuum laminator.

Third process: The two sheets of polycarbonate plate glass that have been temporarily compression-bonded are subjected to final compression-bonding for 1 hour under conditions of 80°C and 0.5 MPa.

Next, a cross peeling test is carried out on the obtained laminated glass sample. Specifically, the maximum load (N) is measured when one sheet of polycarbonate plate glass is peeled off from the other sheet of polycarbonate plate glass in a direction perpendicular to the adhesive surface at a speed of 10 mm/min at 23°C, and this maximum load (N) is defined as the adhesive force.

More specifically, the adhesive force may be measured by setting the sample on the jig shown in Fig. 4. The jig is composed of a box body 11 and a pressing member 20. The box body 11 and the pressing member 20 are composed of SUS. The box body 11 is in the form of a rectangular parallelepiped with an open top surface, and rectangular cutouts 14 and 14 are provided on the upper end surfaces of sides 13 and 13 facing each other. The pressing member 20 is a U-shaped member provided with a rectangular base section 16 and pressing pieces 17 and 17 connected at right angles to both ends of the base 16 in the longitudinal direction. Each pressing piece 17 has a width W of 20 mm and a thickness T of 5 mm, and the distance L between the pressing pieces 17 and 17 is 35 mm.

The laminated glass sample 10 is disposed with one sheet of polycarbonate plate glass 21 bridging over between the cutouts 14 and 14 so that the other sheet of polycarbonate plate 22 is disposed on the bottom side. The maximum load (N) is measured when the polycarbonate plate glass 31 is peeled off by applying a load in the vertical downward direction X, which is perpendicular to the adhesive surface, at a speed of 10 mm/min, and from that maximum load (N), the adhesive force (N/225 mm$^2$) is determined.

The interlayer film of the present invention has good adhesiveness to a variety of types of organic glass. Specifically, the adhesive force of a laminated glass sample obtained by compression-bonding a pair of methacrylate plate glass via the above interlayer film at 100°C is preferably 80 N/225 mm$^2$ or more, more preferably 100 N/225 mm$^2$ or more, and still more preferably 200 N/225 mm$^2$ or more.

In addition, the adhesive force of a laminated glass sample obtained by compression-bonding a pair of PET plate glass via the above interlayer film at 80°C is preferably 80 N/225 mm$^2$ or more, and more preferably 100 N/225 mm$^2$ or more.

Note that the method for measuring the adhesive force in a laminated glass sample obtained from acrylic plate glass and PET plate glass is the same as the method for measuring the adhesive force in the laminated glass sample obtained from polycarbonate plate glass, except that the polycarbonate plate glass is changed to acrylic plate glass or PET plate glass.

(Visible light transmittance)

As for the interlayer film of the present invention, when fabricating laminated glass using two sheets of polycarbonate plate glass with a thickness of 2 mm and a visible light transmittance of 90% in accordance with JIS K6735, the visible light transmittance of the laminated glass is preferably 70% or more. When fabricating laminated glass using the interlayer film of the present invention, a visible light transmittance of 70% or more can ensure high transparency of the laminated glass. From such a viewpoint, the above visible light transmittance is more preferably 80% or more, and still more preferably 85% or more.

Note that the visible light transmittance can be measured using a spectrophotometer in accordance with JIS R3211 (1998).

(Thickness of interlayer film)

The thickness of the interlayer film of the present invention is, for example, 100 μm or more and 2000 μm or less, and preferably 250 μm or more and 900 μm or less. By keeping the thickness of the interlayer film in such a range, it is possible to achieve good adhesiveness to laminated glass members without making it thicker than necessary.

<Laminated glass>

A laminated glass of the present invention comprises a first laminated glass member, a second laminated glass member, and an interlayer film disposed between these first and second laminated glass members. In the laminated glass, the first and second laminated glass members are joined by the interlayer film, and the first laminated glass member adheres to one outermost surface of the interlayer film and the second laminated glass member adheres to the other outermost surface of the interlayer film. The configuration of the interlayer film is as described above.

Each of the first and second laminated glass members is a glass plate, and may be selected from the group consisting of inorganic glass and organic glass. Also, either one of them may be an organic film. In the laminated glass of the present invention, it is preferable that at least one laminated glass member be organic glass. In this case, as for the first and second glass members, one may be organic glass and the other may be inorganic glass, or both may be organic glass, as described above. By using organic glass, corrosion of the laminated glass member by the interlayer film can be effectively prevented while improving the adhesiveness of the interlayer film to the laminated glass member.

The inorganic glass is not particularly limited, but examples thereof include a variety of glass plates such as float plate glass, tempered glass, colored glass, polished plate glass, figured glass, wire mesh plate glass, wired plate glass, ultraviolet absorbing plate glass, infrared reflecting plate glass, infrared absorbing plate glass, and green glass. The inorganic glass may be subjected to a surface treatment or other treatments.

The thickness of the inorganic glass is not particularly limited, but it is preferably 0.1 mm or more, and still more preferably 1.0 mm or more, and also preferably 5.0 mm or less, and still more preferably 3.2 mm or less.

The organic glass is not particularly limited, but examples thereof include a variety of organic glass plates such as a polycarbonate plate, a methacrylate plate such as a polymethyl methacrylate plate, an acrylonitrile styrene copolymer plate, an acrylonitrile butadiene styrene copolymer plate, a polyester plate such as a polyethylene terephthalate (PET) plate, a fluorine-based resin plate, a polyvinyl chloride plate, a chlorinated polyvinyl chloride plate, a polypropylene plate, a polystyrene plate, a polysulfone plate, an epoxy resin plate, a phenolic resin plate, an unsaturated polyester resin plate, and a polyimide resin plate. The organic glass may be subjected to a surface treatment or other treatments as appropriate.

Among those described above, a polycarbonate plate is preferred in terms of its excellent transparency, impact resistance, and combustion resistance, and a methacrylate plate such as a polymethyl methacrylate plate is preferred in terms of its high transparency and excellent weather resistance and mechanical strength. Among these, a polycarbonate plate is preferred. In the present invention, even when the interlayer film is used for organic glass with high hydrophobicity, such as a polycarbonate plate or a methacrylate plate, as a laminated glass member, it is possible to adhere to the laminated glass member with high adhesiveness. Corrosion of the organic glass by the interlayer film can also be prevented.

The thickness of the organic glass is not particularly limited, but it is preferably 0.1 mm or more, and still more preferably 0.3 mm or more, and also preferably 5.0 mm or less, and still more preferably 3.0 mm or less.

The laminated glass of the present invention can be used in a variety of fields. Specifically, it is used for window glass in a variety of carriages such as vehicles including automobiles and trains, ships, and aircraft, or in a variety of architectural structures such as buildings, condominiums, single-family homes, halls, and gymnasiums, or in machine tools such as cutting and grinding machines, and construction machinery such as shovels and cranes.

[Method for producing laminated glass]

The laminated glass can be produced by disposing the interlayer film that has been fabricated in advance between the first and second laminated glass members, and subjecting them to thermocompression bonding or other processes. As for the laminated glass of the present invention, in a case where the interlayer film has a multilayer structure, the interlayer film with a multilayer structure may be created in advance, and the interlayer film with a multilayer structure may be disposed between the first and second laminated glass members. Alternatively, a plurality of resin films for forming the first layer, second layer, or other layer may be overlapped between the first and second laminated glass members, and while the plurality of resin films are integrated into the interlayer film with a multilayer structure, the first and second laminated glass members may be joined via the interlayer film.

The method for thermocompression bonding is not particularly limited, and it may be performed by disposing the interlayer film or the like between a pair of glass members and applying pressure while heating them. The heating

temperature is preferably 60°C or higher and 150°C or lower, and more preferably 70°C or higher and 140°C or lower. In addition, the pressure is preferably 0.4 MPa or more and 1.5 MPa or less, and more preferably 0.5 MPa or more and 1.3 MPa or less. Note that the pressure here is the absolute pressure. Also, examples of the thermocompression bonding include a method using an autoclave and a method using a heating press, but it is preferable to carry out the thermocompression bonding using an autoclave.

In the production of the above laminated glass, after disposing the interlayer film, the plurality of resin films, or the like between the first and second laminated glass members, and before the thermocompression bonding, the air remaining between the pair of laminated glass members may be degassed, if required. The method for degassing is not particularly limited, but it may be carried out by passing the materials through a pressing roll or by placing them in a rubber bag and subjecting them to reduced-pressure suction.

Also, temporary adhesion may be carried out prior to the thermocompression bonding. The temporary adhesion may be carried out by, for example, disposing the interlayer film or the plurality of resin films between the pair of laminated glass members and pressing them together by a relatively low pressure while heating if required. The temporary adhesion may be carried out by, for example, a vacuum laminator. In the case of carrying out degassing, the temporary adhesion may be carried out after the degassing or may be carried out at the same time as the degassing.

Examples

The present invention will be described in further detail with reference to Examples, but the present invention is not limited in any way by these Examples.

Note that the measurement method and evaluation method for each physical property value in the present invention are as follows.

<Surface free energy>

Water and diiodomethane were collected in a syringe and 2-μL droplets were fabricated on the needle tip. The fabricated droplets were brought into contact with the resin film obtained in each of the Examples and Comparative Examples, and the droplets were formed on the resin film. Note that the resin film was retained in the measurement environment for 24 hours prior to the measurement. Also, formation of the droplets was carried out under an environment with a temperature of 23°C and a relative humidity of 50%. Images of the droplets were taken 30 seconds after the dropping. By analyzing these images of the droplets, the contact angles were calculated by the θ/2 method. The average values of 30 measurements were used as the contact angles. From the obtained contact angles with water and diiodomethane, the value of the polar component γsp of the surface free energy was calculated by the method described in the specification. Note that the measurement device used was "DropMaster 500" manufactured by Kyowa Interface Science, Co., LTD.

<Glass transition temperature (Tg)>

The resin films obtained in Examples and Comparative Examples were cut into a length of 10 mm and a width of 5 mm, and the viscoelasticity was measured using a dynamic viscoelasticity measuring device (manufactured by IT Keisoku Seigyo Co., Ltd., product name "DVA-200") under the measurement conditions below. Peak temperatures of the loss tangent tan δ obtained from the results of the viscoelasticity measurement were read. The first peak temperature counted from the low temperature side in the temperature region of -50 to 150°C was defined as the glass transition temperature (Tg).

(Measurement conditions)

deformation mode: shear mode, measurement temperature: -50°C to 200°C, temperature increasing rate: 5°C/min, measurement frequency: 1 Hz, strain: 1%

<Amount of modification, degree of acetalization, degree of acetylation, and amount of hydroxy groups>

The polyvinyl acetal-based resin was dissolved in chloroform-d and measured using 1H-NMR (nuclear magnetic resonance spectrum), and the above properties were determined by analyzing the molar rate of each unit.

<PC adhesiveness>

A resin film sized to a length of 15 mm and a width of 15 mm was prepared, and furthermore, two sheets of

polycarbonate plate glass with a thickness of 2 mm, a length of 25 mm, and a width of 100 mm in accordance with JIS K6735 were prepared. The two sheets of polycarbonate plate glass were disposed so that their longitudinal directions were perpendicular to each other, and they were overlapped crosswise via the resin film.

Thereafter, using a spacer of the same thickness as the resin film so that the thickness of the resin film was constant, the two sheets of polycarbonate plate glass that had been overlapped via the resin film were temporarily compression-bonded for 3 minutes under conditions of 80°C and 0.1 MPa in a vacuum laminator. After that, the polycarbonate plate glass that had been temporarily compression-bonded was subjected to final compression-bonding for additional 1 hour under conditions of 80°C and 0.5 MPa to obtain a laminated glass sample.

A cross peeling test was carried out on the obtained laminated glass sample. Specifically, the maximum load (N) was measured when the laminated glass sample was peeled off in a direction perpendicular to the adhesive surface at a speed of 10 mm/min under an environment with a temperature of 23°C, and this maximum load (N) was defined as the adhesive force and evaluated based on the following criteria.

(Evaluation criteria)

AA: The maximum load is 180 N or more.
A: The maximum load is 100 N or more and less than 180 N.
$A^-$: The maximum load is 80 N or more and less than 100 N.
B: The maximum load is less than 80 N.

<PC corrodibility>

A resin film sized to a length of 25 mm and a width of 50 mm was prepared, and furthermore, two sheets of polycarbonate plate glass with a thickness of 2 mm, a length of 25 mm, and a width of 50 mm in accordance with JIS K6735 were prepared. The polycarbonate plate glass was heated at 80°C overnight (24 hours) to dry the moisture contained in the polycarbonate plate glass. Next, the two sheets of polycarbonate plate glass were overlapped via the resin film.

Thereafter, the polycarbonate plate glass that had been overlapped via the resin film was temporarily compression-bonded for 3 minutes under conditions of 80°C and 0.1 MPa. The polycarbonate plate glass that had been temporarily compression-bonded was subjected to final compression-bonding for additional 1 hour under conditions of 80°C and 0.5 MPa to obtain a laminated glass sample.

As for the obtained laminated glass sample, the total light transmittance measured in accordance with JIS R3211 (1998) using a spectrophotometer ("U-4100" manufactured by Hitachi High-Tech Corporation) was defined as x1. Next, the laminated glass sample was heated in a thermostatic chamber at 100°C for 10 days (240 hours). The laminated glass sample after heating was returned to ordinary temperature (23°C), and the total light transmittance measured in the same manner using the spectrophotometer was defined as x2.

(Evaluation criteria)

A: The total light transmittance is 85% or more.
B: The total light transmittance is less than 85%.

<Adhesiveness (to acryl)>

A laminated glass sample was fabricated in the same manner with two sheets of methacrylate plate glass via the resin film, except that the Comoglas (Part No. CGP) methacrylate plate glass manufactured by Kuraray Co., Ltd. was used instead of the polycarbonate plate glass and the temperature during compression-bonding (temporary compression-bonding and final bonding) was changed from 80°C to 100°C, and the maximum load (N) was measured by the same approaches. This maximum load (N) was defined as the adhesive force, and was evaluated based on the above evaluation criteria.

<Adhesiveness (to PET)>

A laminated glass sample was fabricated in the same manner with two sheets of PET plate glass via the resin

film, except that the PET-6010 (Part No. 6010) PET plate glass manufactured by C.I. TAKIRON Corporation was used instead of the polycarbonate plate glass, and the maximum load (N) was measured by the same approaches. This maximum load (N) was defined as the adhesive force, and was evaluated based on the above evaluation criteria.

(Example 1)

In a 500-mL separable flask that had been dried under a stream of nitrogen, 300 g of THF and 30 g of a polyvinyl butyral (average degree of polymerization: 1700, degree of acetylation: 1 mol%, amount of hydroxy groups: 33 mol%, degree of acetalization: 66 mol%, unmodified polyvinyl butyral, PVB1) were charged, and the polyvinyl butyral was dissolved by stirring at 65°C.

To this solution, 30 g of octadecyl isocyanate was added as the modifying agent and the mixture was stirred for 10 minutes. The solution was taken out of the separable flask and poured into an aluminum pad on which a PET release film (product name "PET50D1-C", manufactured by Nippa Corporation) was laid with the release treated side facing up, and then heated in an oven at 130°C for 2 hours to allow a reaction, resulting in a film composed of a polyvinyl acetal-based resin having the functional group of formula (1-1). The obtained polyvinyl acetal-based resin was subjected to press molding at a temperature of 160°C and a pressure of 20 MPa to obtain a resin film with a thickness of 800 μm. When the obtained resin film was measured by an infrared spectrophotometer (IR), progress of the reaction was confirmed by disappearance of the peak of the isocyanate group (wavenumber: 2260 $cm^{-1}$).

(Example 2)

The process was performed in the same manner as in Example 1, except that the polyvinyl butyral used as a raw material was changed to PVB2 (average degree of polymerization: 830, degree of acetylation: 2 mol%, amount of hydroxy groups: 33 mol%, degree of acetalization: 65 mol%, unmodified polyvinyl butyral) instead of PVB1.

(Example 3)

In a 500-mL separable flask that had been dried under a stream of nitrogen, 300 g of THF and 30 g of PVB2 as the raw material polyvinyl butyral were charged, and the polyvinyl butyral was dissolved by stirring at 65°C. To this solution, 15.9 g of pyridine and 22.0 g of lauroyl chloride were added, and a reaction was carried out at 65°C for 3 hours. Thereafter, the reaction solution was collected, the reaction solution was washed three times with a mixed solvent of water and methanol (mass rate of 1:1), and then dried to obtain a polyvinyl acetal-based resin having the functional group of formula (1-2). The obtained polyvinyl acetal-based resin was subjected to press molding at a temperature of 160°C and a pressure of 20 MPa to obtain a resin film.

(Example 4)

The process was performed in the same manner as in Example 3, except that the amount of pyridine added was changed to 11.3 g and 11.7 g of 2-ethylhexanoyl chloride was used instead of 22.0 g of lauroyl chloride.

(Example 5)

The process was performed in the same manner as in Example 3, except that the amount of pyridine added was changed to 15.9 g and 16.3 g of 2-ethylhexanoyl chloride was used instead of 22.0 g of lauroyl chloride.

(Example 6)

The process was performed in the same manner as in Example 3, except that the amount of pyridine added was changed to 15.9 g and 27.6 g of palmitoyl chloride was used instead of 22.0 g of lauroyl chloride.

(Example 7)

In a 500-mL separable flask that had been dried under a stream of nitrogen, 300 g of pyridine and 30 g of a raw material polyvinyl butyral (degree of acetalization: 62 mol%, amount of hydroxy groups: 30 mol%, acetyl groups: 8 mol%, degree of polymerization: 3200, unmodified polyvinyl acetal, PVB3) were charged, and the raw material polyvinyl butyral was dissolved by stirring with stirring blades. Thereafter, 45.6 molar equivalent amounts of acetic anhydride was added, and the mixture was stirred under an environment of 80°C for 4 hours. After removing pyridine under reduced pressure, the reaction product was washed three times with water and dried to obtain a polyvinyl butyral-based resin

(degree of acetalization: 62 mol%, acetyl groups: 38 mol%, degree of polymerization: 3200, unmodified polyvinyl acetal).

100 parts by mass of the obtained dried product and 10 parts by mass of a plasticizer (triethylene glycol-di-2-ethylhexanoate, 3GO) were thoroughly kneaded to obtain a resin composition, which was then subjected to press molding to obtain a resin film (interlayer film) with a thickness of 800 μm.

(Example 8)

[Synthesis of ethylene oxide-modified polyvinyl alcohol]

In a flask equipped with a stirrer, a thermometer, a dropping funnel, and a reflux condenser, 1000 parts by mass of vinyl acetate, 320 parts by mass of a polyoxyethylene monovinyl ether with an average repeating unit m = 10, and 300 parts by mass of methanol were added, and after carrying out a nitrogen purge in the system, the temperature was increased to 60°C. To this system, 1.1 parts by mass of 2,2-azobisisobutyronitrile was added to initiate polymerization. The polymerization was terminated 5 hours after the initiation of the polymerization. The solid concentration in the system at the time of polymerization termination was 53% by mass, and the polymerization yield was 65% by mass with respect to the entire monomers. After removing unreacted monomers under reduced pressure, a 40 mass% methanol solution of the copolymer was obtained. The obtained copolymer was confirmed to contain 96.0 mol% of vinyl acetate units and 4.0 mol% of ethylene oxide-containing alkyl vinyl ether units from the quantification of unreacted monomers.

While stirring 100 parts by mass of the obtained methanol solution of the copolymer at 40°C, 2.0 parts by mass of a 3 mass% NaOH methanol solution was added, and the mixture was mixed well and then left to stand. After 2 hours, the solidified polymer was ground in a grinder, washed with methanol, and then dried to obtain polymer powder (ethylene oxide-modified polyvinyl alcohol). The ethylene oxide-modified polyvinyl alcohol had a degree of saponification of 90.1 mol%, an amount of ethylene oxide units of 4.0 mol%, and a degree of polymerization of 700.

[Preparation of polyvinyl butyral (PVB5)]

280 g of the obtained polymer powder was added to 2100 g of pure water, and dissolved by stirring at a temperature of 90°C for about 2 hours. The solution was cooled to 40°C, 135 parts by mass of hydrochloric acid with a concentration of 35 mass% and 130 parts by mass of n-butyraldehyde were added, the liquid temperature was lowered to 20°C, an acetalization reaction was carried out while retaining the temperature, and the reaction product was precipitated. Thereafter, the reaction was completed while retaining the liquid temperature at 40°C for 3 hours, and after passing through neutralization, washing with water, and drying by ordinary methods, white powder of a polyvinyl acetal-based resin (PVB5) was obtained.

[Fabrication of resin film]

The obtained polyvinyl acetal-based resin (PVB5) was subjected to press molding in the same manner as in Example 1 to obtain a resin film (interlayer film) with a thickness of 800 μm.

(Example 9)

The amount of the 3 mass% NaOH methanol solution at the time of synthesis of the ethylene oxide-modified polyvinyl alcohol was changed to 6.2 parts by mass, resulting in an ethylene oxide-modified polyvinyl alcohol with a degree of polymerization of 690. In addition, a resin film (interlayer film) was created by the same method as in Example 8, except that the amount of the hydrochloric acid with a concentration of 35 mass% was changed to 160 parts by mass and the amount of n-butyraldehyde was changed to 150 parts by mass at the time of preparing the polyvinyl butyral. Note that the polyvinyl acetal-based resin fabricated in Example 9 is referred to as PVB6.

(Comparative Example 1)

A resin composition was obtained by mixing 100 parts by mass of PVB1 (average degree of polymerization: 1700, degree of acetylation: 1 mol%, amount of hydroxy groups: 33 mol%, degree of acetalization: 66 mol%, unmodified polyvinyl butyral) and 40 parts by mass of a plasticizer (3GO), and the obtained resin composition was subjected to press molding by the same method as in Example 1 to obtain a resin film.

(Comparative Example 2)

A resin film was fabricated in the same manner as in Comparative Example 1, except that the amount of the

plasticizer (3GO) compounded was changed to 20 parts by mass.

(Comparative Example 3)

A resin film was fabricated in the same manner as in Example 7, except that the plasticizer (3GO) was not added.

(Comparative Example 4)

PVB4 (average degree of polymerization: 490, degree of acetylation: 2 mol%, amount of hydroxy groups: 21 mol%, degree of acetalization: 77 mol%, unmodified polyvinyl butyral) was subjected to press molding by the same method as in Example 1 to obtain a resin film.

(Comparative Example 5)

The process was performed in the same manner as in Example 3, except that the amount of pyridine added was changed to 4.5 g and 4.7 g of 2-ethylhexanoyl chloride was used instead of 22.0 g of lauroyl chloride.

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| PVB-based resin | Raw material PVB | PVB1 | PVB2 | PVB2 | PVB2 | PVB2 | PVB2 | PVB3 | PVB5 | PVB6 | PVB1 | PVB1 | PVB3 | PVB4 | PVB2 |
| | Modifying agent | C18 isocyanate | C18 isocyanate | C12 chloride | Branched C8 chloride | Branched C8 chloride | C16 chloride | Reacetylation | Ethylene oxide | Ethylene oxide | None | None | Reacetylation | None | Branched C8 chloride |
| | Amount of modifying agent compounded (parts by mass) | 100 | 100 | 73.2 | 38.9 | 54.4 | 91.9 | - | - | - | - | - | - | - | 15.5 |
| | Amount of modification (mol%) | 21 | 21 | 11 | 6 | 17 | 11 | - | 4 | 4 | - | - | - | - | 4 |
| | Degree of acetalization (mol%) | 66 | 65 | 65 | 65 | 65 | 65 | 62 | 65 | 73 | 66 | 66 | 62 | 77 | 65 |
| | Degree of acetylation (mol%) | 1 | 1 | 1 | 1 | 1 | 1 | 38 | 1 | 1 | 1 | 1 | 38 | 2 | 1 |
| | Amount of hydroxy groups (mol%) | 12 | 13 | 23 | 28 | 17 | 23 | 0 | 30 | 22 | 33 | 33 | 0 | 21 | 30 |
| | Content (parts by weight) | 100 | 100 | 100 | 100 | 100 | 100 | 100 | 100 | 100 | 100 | 100 | 100 | 100 | 100 |

(continued)

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| Plasticizer | Content (parts by weight) | - | - | - | - | - | - | 10 | - | - | 40 | 20 | - | - | - |
| | Type | - | - | - | - | - | - | 3GO | - | - | 3GO | 3GO | - | - | - |
| Glass transition temperature (°C) | | 44 | 38 | 39 | 47 | 40 | 43 | 44 | 46 | 40 | 30 | 38 | 53 | 71 | 53 |
| Polar component of surface free energy [$mJ/m^2$] | | 0.4 | 0.4 | 3.2 | 2.9 | 5.5 | 4.3 | 5.7 | 4.2 | 3.2 | 11.8 | 9.8 | 4.9 | 12.1 | 2.9 |
| Film thickness ($\mu m$) | | 800 | 800 | 800 | 800 | 800 | 800 | 200 | 800 | 800 | 800 | 800 | 800 | 800 | 800 |
| Evaluation | PC adhesiveness | A | A | AA | A | A | AA | A | A- | A | B | B | B | B | B |
| | PC corrodibility (×1) | A | A | A | A | A | A | A | A | A | A | A | A | A | A |
| | PC corrodibility (×2) | A | A | A | A | A | A | A | A | A | B | B | A | A | A |
| | Acryl adhesiveness | A- | A- | A- | A- | A- | A- | A- | AA | AA | B | B | B | B | B |
| | PET adhesiveness | - | - | - | - | - | - | - | A | A | B | B | B | B | B |

* Abbreviations in Table 1 are as follows.

C18 isocyanate: n-octadecyl isocyanate
C12 chloride: lauroyl chloride
Branched C8 chloride: 2-ethylhexanoyl chloride
C16 chloride: palmitoyl chloride

* The amount of the modifying agent compounded is the amount of the modifying agent compounded based on 100 parts by mass of the raw material polyvinyl acetal.

* The amount of modification, the degree of acetalization, the degree of acetylation, and the amount of hydroxy groups in Table 1 are values related to the polyvinyl acetal-based resin contained in the obtained resin film (resin composition).

* The content of the plasticizer is the content based on 100 parts by mass of the resin (polyvinyl acetal-based resin).

In each of the above Examples, since the resin composition comprises a polyvinyl acetal-based resin, the resin composition has a glass transition temperature of 50°C or lower, and the polar component γsp is a value of 0.1 $mJ/m^2$ or more and 8.0 $mJ/m^2$ or less, even after heating for a long period of time, good adhesiveness to the polycarbonate plate was achieved while preventing corrosion of the polycarbonate plate by the resin composition.

In contrast, in each of the Comparative Examples, since the glass transition temperature exceeded 50°C or the polar component γsp exceeded 8.0 $mJ/m^2$, it was not possible to achieve good adhesiveness to the polycarbonate plate while preventing corrosion of the polycarbonate plate by the resin composition.

Reference Signs List

| | |
|---|---|
| 30A, 30B, 30C | Interlayer film for laminated glass |
| 31, 31A, 31B | First layer |
| 32 | Second layer |
| 41 | First laminated glass member |
| 42 | Second laminated glass member |

## Claims

1. A resin composition, comprising a polyvinyl acetal-based resin, and having a glass transition temperature of 50°C or lower and a value of a polar component γsp of a surface free energy according to a Kaelble-Uy method of 0.1 $mJ/m^2$ or more and 8.0 $mJ/m^2$ or less.

2. The resin composition according to claim 1, wherein the polyvinyl acetal-based resin has at least one selected from the group consisting of functional groups represented by the following formula (1-1), formula (1-2), formula (1-3), and formula (1-4):

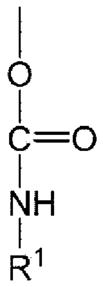

(1-1)

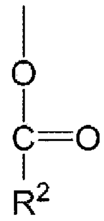

(1-2)

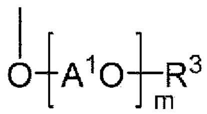

(1-3)

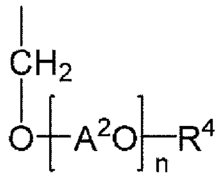

(1-4)

wherein, in formulae (1-1) and (1-2), $R^1$ and $R^2$ are each independently a hydrocarbon having 2 to 30 carbon atoms; in formulae (1-3) and (1-4), $A^1O$ and $A^2O$ are each independently an oxyalkylene group having 2 to 4 carbon atoms; m and n are average repeating numbers and are 4 to 200; and $R^3$ and $R^4$ are each independently an alkyl group having 1 to 4 carbon atoms or a hydrogen atom; provided that, in formulae (1-3) and (1-4), the oxyalkylene group may be one type alone or may be a mixture of two or more types.

**3.** The resin composition according to claim 2, wherein, in the polyvinyl acetal-based resin, an amount of modification by the functional groups represented by formula (1-1) and formula (1-2) is 5 mol% or more and 25 mol% or less.

**4.** The resin composition according to any one of claims 1 to 3, wherein the resin composition contains no plasticizer or the resin composition contains a plasticizer in an amount of 10 parts by mass or less based on 100 parts by mass of a resin contained in the resin composition.

**5.** An interlayer film for laminated glass, comprising a first layer formed of the resin composition according to any one of claims 1 to 4.

**6.** The interlayer film for laminated glass according to claim 5, wherein the interlayer film for laminated glass is composed of the first layer.

**7.** The interlayer film for laminated glass according to claim 5 or 6, wherein the interlayer film for laminated glass has a thickness of 100 $\mu$m or more and 2000 $\mu$m or less.

**8.** A laminated glass comprising the interlayer film for laminated glass according to any one of claims 5 to 7 and first and second laminated glass members, wherein the interlayer film for laminated glass is disposed between the first and second laminated glass members.

**9.** The laminated glass according to claim 8, wherein at least either of the first and second laminated glass members is a polycarbonate plate or a methacrylate plate.

Fig. 1

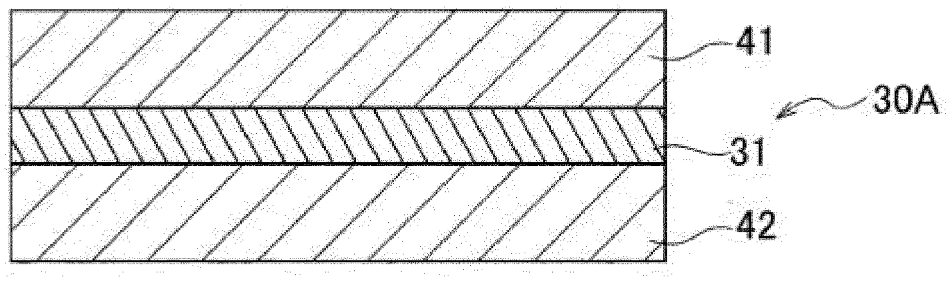


Fig. 2

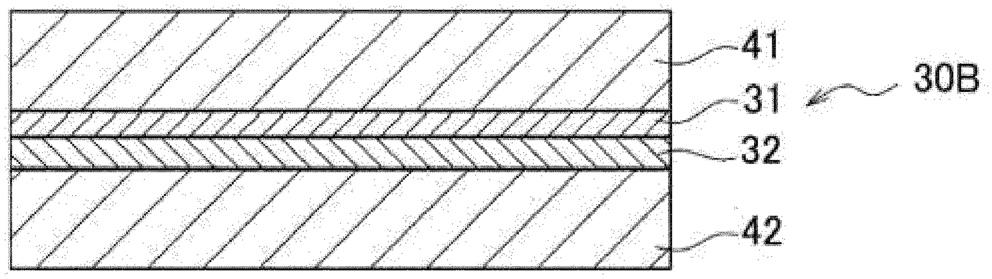


Fig. 3

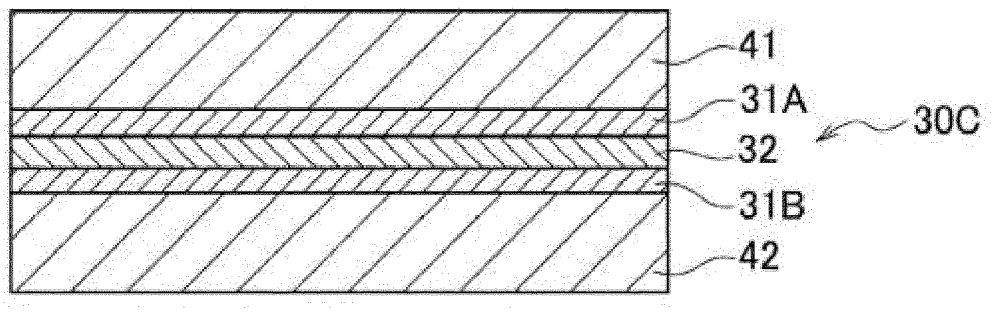

Fig. 4

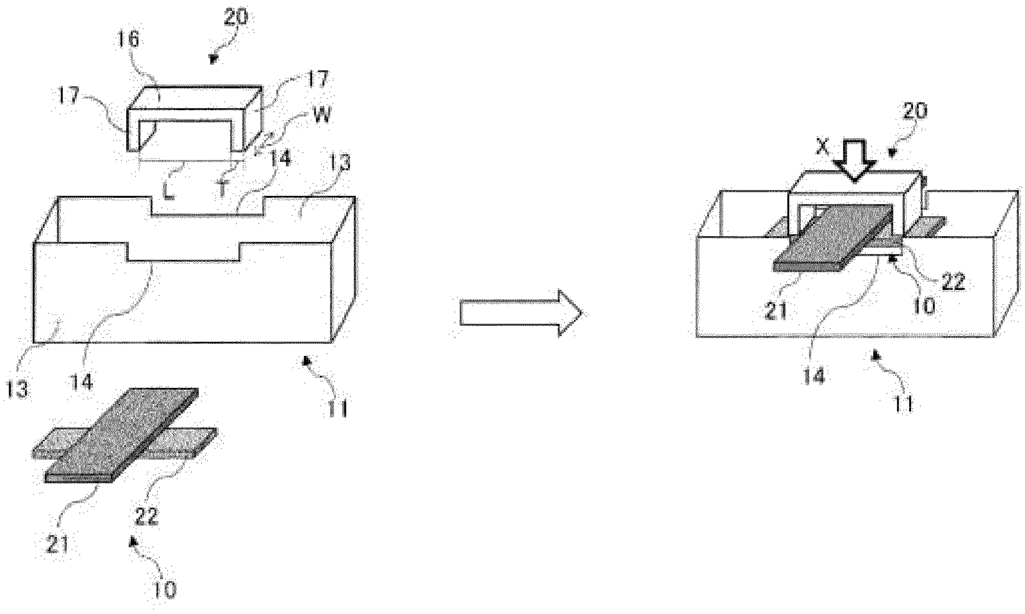

## INTERNATIONAL SEARCH REPORT

International application No.
PCT/JP2021/016104

A. CLASSIFICATION OF SUBJECT MATTER
B32B 17/10(2006.01)i; B32B 27/30(2006.01)i; C03C 27/12(2006.01)i; C08F 8/30(2006.01)i; C08L 29/14(2006.01)i; B60J 1/00(2006.01)i
FI: C08L29/14; C08F8/30; B32B17/10; B32B27/30 102; C03C27/12 D; C03C27/12 Q; B60J1/00 H

According to International Patent Classification (IPC) or to both national classification and IPC

B. FIELDS SEARCHED

Minimum documentation searched (classification system followed by classification symbols)
C08L29/00-29/14; C08K3/00-13/08; C08F8/00-8/50; C03C27/00-29/00; B32B27/00-27/42; B32B17/00-17/12; B60J1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2008/143286 A1 (KURARAY CO., LTD.) 27 November 2008 (2008-11-27) claims, paragraphs [0058]-[0062], [0080], examples | 1-6, 8<br>7, 9 |
| X<br>Y | JP 2009-108305 A (KURARAY CO., LTD.) 21 May 2009 (2009-05-21) claims, paragraph [0065], examples | 1-6, 8<br>7, 9 |
| X<br>Y | JP 2014-224234 A (SEKISUI CHEMICAL CO., LTD.) 04 December 2014 (2014-12-04) claims, paragraphs [0002]-[0006], [0042] | 1, 4-6, 8<br>7, 9 |
| X<br>A | JP 2013-124368 A (PELNOX LIMITED) 24 June 2013 (2013-06-24) claims, paragraph [0033], examples | 1-4<br>5-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 June 2021 (15.06.2021) | 29 June 2021 (29.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/016104

C (Continuation). DOCUMENTS CONSIDERED TO BE RELEVANT

| Category* | Citation of document, with indication, where appropriate, of the relevant passages | Relevant to claim No. |
|---|---|---|
| X | CN 108164621 A (JISHENG PHOTOELECTRIC SHENZHEN CO., LTD.) 15 June 2018 (2018-06-15) claims, examples | 1, 2, 4 |
| X<br>A | JP 2014-72103 A (SEKISUI CHEMICAL CO., LTD.) 21 April 2014 (2014-04-21) claims, paragraphs [0023], [0024], [0030] | 1, 2, 4<br>3, 5-9 |
| Y | WO 2015/152239 A1 (SEKISUI CHEMICAL CO., LTD.) 08 October 2015 (2015-10-08) claims, paragraphs [0026], [0029] | 7, 9 |
| Y | JP 2017-66007 A (SEKISUI CHEMICAL CO., LTD.) 06 April 2017 (2017-04-06) claims, paragraphs [0138], [0152] | 7, 9 |

Form PCT/ISA/210 (continuation of second sheet) (January 2015)

**INTERNATIONAL SEARCH REPORT**
Information on patent family members

International application No.
PCT/JP2021/016104

| Patent Documents referred in the Report | Publication Date | Patent Family | Publication Date |
|---|---|---|---|
| WO 2008/143286 A1 | 27 Nov. 2008 | US 2010/0143720 A1 claims, paragraphs [0081]-[0086], [0106], examples<br>CN 101679667 A<br>KR 10-2010-0013330 A | |
| JP 2009-108305 A | 21 May 2009 | (Family: none) | |
| JP 2014-224234 A | 04 Dec. 2014 | (Family: none) | |
| JP 2013-124368 A | 24 Jun. 2013 | (Family: none) | |
| CN 108164621 A | 15 Jun. 2018 | (Family: none) | |
| JP 2014-72103 A | 21 Apr. 2014 | (Family: none) | |
| WO 2015/152239 A1 | 08 Oct. 2015 | US 2017/0015800 A1 claims, paragraphs [0037], [0043]<br>CN 106164007 A<br>KR 10-2016-01383890 A | |
| JP 2017-66007 A | 06 Apr. 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017066007 A
- WO 2012133351 A
- JP 2003183059 A